# EUROPEAN PATENT SPECIFICATION

(11) **EP 3 330 765 B1**
(45) Date of publication and mention of the grant of the patent: **19.08.2020**
(21) Application number: 16830316.2
(22) Date of filing: 13.07.2016
(51) Int. Cl.: G02B 26/12, H04N 1/113, G02B 13/00, G06K 7/10, G06K 15/12, H04N 1/191, H04N 1/29

(54) **LIGHT SCANNING DEVICE AND IMAGE FORMING DEVICE**
LICHTABTASTVORRICHTUNG UND BILDERZEUGUNGSVORRICHTUNG
DISPOSITIF DE BALAYAGE DE LUMIÈRE ET DISPOSITIF DE FORMATION D'IMAGE

(30) Priority: 30.07.2015 JP 2015150892
(43) Date of publication of application: 06.06.2018
(73) Proprietor: Kyocera Document Solutions Inc., Osaka-shi, Osaka 540-8585 (JP)
(72) Inventor: NAKANO, Issei, Osaka-shi, Osaka 540-8585 (JP)
(74) Representative: Plougmann Vingtoft a/s
(86) International application number: PCT/JP2016/070628
(87) International publication number: WO 2017/018211

(56) References cited:
- JP-A- 2006 301 205
- JP-A- 2006 301 205
- JP-A- 2006 323 277
- JP-A- 2008 122 706
- JP-A- 2010 262 244
- US-A1- 2008 170 283

## Description

### TECHNICAL FIELD

The present invention relates to an image forming apparatus and a laser scanning unit for scanning a light beam.

### BACKGROUND ART

An image forming apparatus of an electrophotographic type is provided with a laser scanning unit which scans a scanning target surface such as a photosensitive drum with a light beam applied from a light source. In particular, there is known a laser scanning unit in which, in a rotary polygon mirror, a plurality of light beams are made incident at a plurality of incidence positions different in an axial direction parallel to a rotary shaft, and then each light beam is scanned onto a scanning target surface (see Patent Literature 1).
JP 2008 122706 seeks to provide an optical scanner in a configuration that can eliminate the displacement of the scanning position of light beam due to the reflection point variations by preventing variation in the light incidence angle to the polygon mirror due to environmental changes. The document discloses that the optical scanner is composed of light sources, a deflector to deflect the light flux from those light sources, and an imaging optical element to guide the light flux deflected by the above deflector to various surfaces to be scanned and to form spots. Each of the light flux led to various different surfaces to be scanned enters the deflector with a certain opening angle to the main scanning direction. At least one of the imaging optical elements leading to different surfaces to be scanned is disposed staggering in the direction perpendicularly crossing the optical axis in the main scanning direction

### CITATION LIST

### [PATENT LITERATURE]

[PTL 1] Japanese Laid-Open Patent Publication No. H10-104537

### SUMMARY OF THE INVENTION

### PROBLEMS TO BE SOLVED BY THE INVENTION

The rotary polygon mirror is rotatably supported by the rotary shaft, and one end of the rotary shaft is supported by a shaft support portion. Therefore, at a position more distant from the shaft support portion, the tilting amount of the rotary shaft becomes greater and thus sway of the rotary polygon mirror during rotation increases, resulting in reduction in optical performance of the light beam scanned onto the scanning target surface. For example, a light beam applied to a position distant from the shaft support portion causes a greater field curvature on the scanning target surface as compared to a light beam applied to a position near the shaft support portion.

An object of the present invention is to provide a laser scanning unit and an image forming apparatus that enable reduction in difference among optical performances of a plurality of light beams scanned by a rotary polygon mirror.

### SOLUTION TO THE PROBLEMS

A laser scanning unit according to one aspect of the present inventionis defined in claim 1.

A laser scanning unit comparable to the present invention includes: a rotary polygon mirror, a shaft support portion, a plurality of light application portions, and a plurality of scanning lenses. The rotary polygon mirror is rotatable about a rotary shaft. The shaft support portion supports one end of the rotary shaft. The plurality of light application portions are configured to cause light beams to be incident at a plurality of incidence positions different in an axial direction parallel to the rotary shaft on the rotary polygon mirror. The plurality of scanning lenses are provided correspondingly for the plurality of light beams scanned by rotation of the rotary polygon mirror, and are configured to scan the respective light beams at an equal speed on scanning target surfaces corresponding to the light beams. In the laser scanning unit, the following relationship is satisfied: when, of the plurality of light beams, a specific light beam incident at the incidence position that is most distant from the shaft support portion on the rotary polygon mirror passes through an optical axis of the corresponding scanning lens, an angle between the specific light beam incident on the rotary polygon mirror and the optical axis of the scanning lens is smaller than that of the other light beam.

An image forming apparatus according to another aspect of the present invention includes the laser scanning unit, and is configured to develop an electrostatic latent image formed on the scanning target surface by the laser scanning unit, and transfer the developed image onto a sheet.

### ADVANTAGEOUS EFFECTS OF THE INVENTION

The present invention enables reduction in difference among optical performances of the plurality of light beams scanned by the rotary polygon mirror.

### BRIEF DESCRIPTION OF THE DRAWINGS

[FIG. 1] FIG. 1 is a diagram showing the configuration of an image forming apparatus according to an embodiment of the present invention.
[FIG. 2] FIG. 2 is a perspective view showing a major part configuration of a laser scanning unit according to the embodiment of the present invention.
[FIG. 3] FIG. 3 is a plan view showing the major part configuration of the laser scanning unit according to the embodiment of the present invention.
[FIG. 4] FIG. 4 is a plan view showing the major part configuration of the laser scanning unit according to the embodiment of the present invention.

### DESCRIPTION OF EMBODIMENTS

Hereinafter, embodiments of the present invention will be described with reference to the accompanying drawings. The following embodiments are merely examples embodying the present invention, and are not intended to limit the technical scope of the present invention.

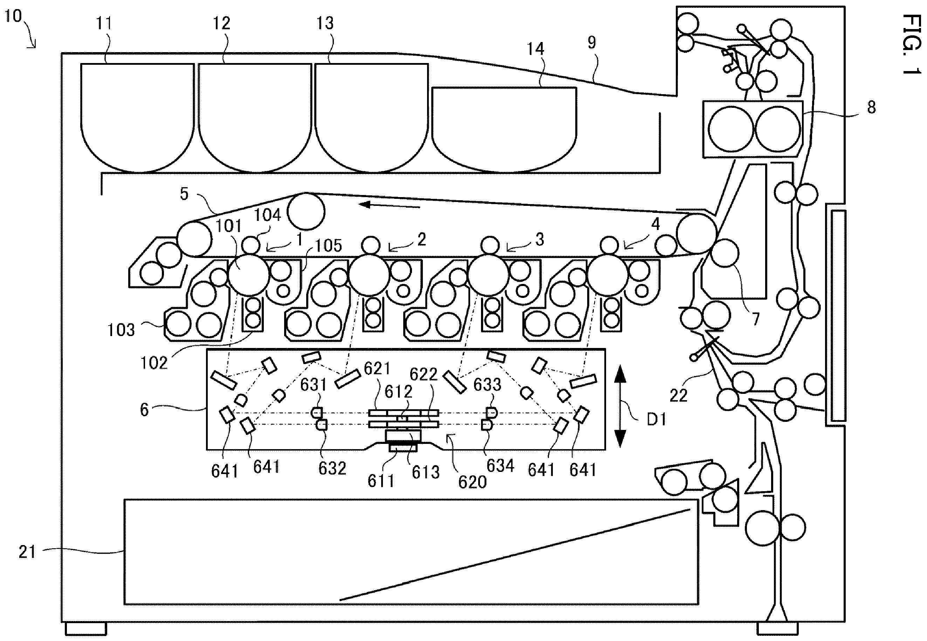

As shown in FIG. 1, an image forming apparatus 10 is a color printer including image forming units 1 to 4, an intermediate transfer belt 5, a laser scanning unit 6, a secondary transfer roller 7, a fixing device 8, a sheet discharge tray 9, toner containers 11 to 14, a sheet feed cassette 21, a conveyance path 22, and the like.

In the image forming apparatus 10, on the basis of inputted image data, a monochrome image or a color image is formed on a sheet fed along the conveyance path 22 from the sheet feed cassette 21, and the sheet on which an image has been formed is discharged to the sheet discharge tray 9. It is noted that other examples of the image forming apparatus according to the present invention include a facsimile, a copy machine, and a multifunction peripheral.

The image forming unit 1 is an image forming portion of an electrophotographic type that includes a photosensitive drum 101, a charging device 102, a developing device 103, a primary transfer roller 104, a cleaning device 105, and the like. The image forming units 2 to 4 have the same configuration as the image forming unit 1. The image forming units 1 to 4 are arranged side by side along the running direction (horizontal direction) of the intermediate transfer belt 5, and thus form so-called tandem-type image forming portions. The intermediate transfer belt 5 is an intermediate transfer member onto which toner images in respective colors formed on the photosensitive drums 101 of the image forming units 1 to 4 are transferred intermediately. It is noted that the toner images intermediately transferred on the intermediate transfer belt 5 are transferred onto a sheet by the secondary transfer roller 7, and the image on the sheet is melted and fixed on the sheet by the fixing device 8.

The laser scanning unit 6 applies light beams corresponding to inputted image data for respective colors, to the photosensitive drums 101 of the image forming units 1 to 4, thereby forming electrostatic latent images on the respective photosensitive drums 101. In the image forming apparatus 10, the electrostatic latent images formed on the photosensitive drums 101 by the laser scanning unit 6 are developed by the developing device 103, and then transferred onto a sheet via the intermediate transfer belt 5. In the present embodiment, the case where one laser scanning unit 6 is provided for four image forming units 1 to 4 is described. However, a first laser scanning unit for two image forming units 1, 2 and a second laser scanning unit for two image forming units 3, 4 may be provided.

The laser scanning unit 6 includes a drive portion 611, a rotary shaft 612, a shaft support portion 613, a rotary polygon mirror 620, scanning lenses 631 to 634, a plurality of reflection mirrors 641, and the like. In the laser scanning unit 6, light beams corresponding to the respective image forming units 1 to 4 are scanned by the rotary polygon mirror 620, and then guided by the reflection mirrors 641 to the respective photosensitive drums 101 of the image forming units 1 to 4.

The drive portion 611 is a motor used for rotating the rotary polygon mirror 620. The rotary shaft 612 is a drive shaft rotated by the drive portion 611 and rotatably supports the rotary polygon mirror 620. More specifically, the drive portion 611 includes a rotor and a stator one of which is an electromagnet and the other one of which is a permanent magnet. The rotor is connected to the rotary shaft 612. The rotor rotates together with the rotary shaft 612 by interaction between the rotor and the stator, whereby the rotary polygon mirror 620 rotates about the rotary shaft 612. The shaft support portion 613 is a fluid bearing rotatably supporting one end of the rotary shaft 612. The other end of the rotary shaft 612 is not supported by a bearing or the like.

The rotary polygon mirror 620 has a first rotary polygon mirror 621 and a second rotary polygon mirror 622 connected with a gap therebetween on the rotary shaft 612. Here, the first rotary polygon mirror 621 and the second rotary polygon mirror 622 are in such a positional relationship that the first rotary polygon mirror 621 is more distant from the rotation support portion 613 than the second rotary polygon mirror 622. It is noted that no gap may be formed between the first rotary polygon mirror 621 and the second rotary polygon mirror 622.

The first rotary polygon mirror 621 and the second rotary polygon mirror 622 each have a plurality of reflection surfaces around the periphery thereof. For example, the first rotary polygon mirror 621 and the second rotary polygon mirror 622 each have six reflection surfaces around the periphery thereof, and are polygon mirrors having regular hexagonal shapes in a plan view. The configuration of the rotary polygon mirror 620 is not limited to a configuration having plural stages of rotary polygon mirrors like the first rotary polygon mirror 621 and the second rotary polygon mirror 622, but may be formed of one rotary polygon mirror in which the upper and lower peripheral reflection surfaces are contiguous to each other. In another embodiment, the rotary polygon mirror 620 may be divided into three or more rotary polygon mirrors.

The rotary polygon mirror 620 is rotated together with the rotary shaft 612 by the drive portion 611, thereby scanning light beams incident on the first rotary polygon mirror 621 and the second rotary polygon mirror 622.

In the laser scanning unit 6, two systems of light application portions described later are provided which cause a plurality of light beams to be incident on the first rotary polygon mirror 621 and the second rotary polygon mirror 622 corresponding to a plurality of incidence positions different in an axial direction D1 parallel to the rotary shaft 612 on the rotary polygon mirror 620. Here, if the two systems of light application portions are arranged in line along the axial direction D1, it is necessary to enlarge the size of the rotary polygon mirror 620 in the axial direction D1. Therefore, in the laser scanning unit 6, the two systems of the light application portions are arranged so that light beams are incident on the rotary polygon mirror 620 at different angles in a plan view.

The scanning lenses 631, 632 are fθ lenses which are provided correspondingly for the plurality of light beams scanned by the first rotary polygon mirror 621 and the second rotary polygon mirror 622, and cause the respective light beams to scan at an equal speed on the photosensitive drums 101 which are scanning target surfaces. The scanning lenses 631, 632 cause the respective light beams scanned by the first rotary polygon mirror 621 and the second rotary polygon mirror 622 to be imaged (condensed) on the photosensitive drums 101. The light beams that have passed through the scanning lenses 631, 632 are respectively reflected by the reflection mirrors 641 to be guided to the photosensitive drums 101.

Here, in the laser scanning unit 6, fθ lenses of the same standard are used for the scanning lenses 631, 632. It is noted that the standard of the scanning lens 631 prescribes, for example, a usage condition that minimizes a field curvature caused on the scanning target surface by a light beam that has passed through the scanning lens 631 and is scanned on the scanning target surface. In particular, in the usage condition, an optimum value of an angle θ (hereinafter, referred to as "incidence opening angle θ") between the light beam incident on the rotary polygon mirror 620 and the optical axis of the scanning lens 631 when the light beam enters through the optical axis (virtual axis passing through the center of the scanning lens 631) of the scanning lens 631, is defined as a reference angle θ0.

However, in the laser scanning unit 6, the two systems of light application portions are arranged so that light beams are incident on the rotary polygon mirror 620 at different angles in a plan view. Therefore, in the case where the scanning lenses 631, 632 corresponding to the two systems of light application portions are fθ lenses of the same standard, it is impossible to make the incidence opening angles θ of both scanning lenses 631, 632 coincide with the reference angle θ0.

Further, the rotary polygon mirror 620 is rotatably supported by the rotary shaft 612, and one end of the rotary shaft 612 is supported by the shaft support portion 613. Therefore, at a position more distant from the shaft support portion 613, the tilting amount of the rotary shaft 612 becomes greater and thus sway of the rotary polygon mirror 620 during rotation increases, so that optical performance of the light beam scanned onto the photosensitive drum 101 might be reduced. For example, a light beam applied to a position distant from the shaft support portion 613 causes a greater field curvature on the photosensitive drum 101 which is a scanning target surface, as compared to a light beam applied to a position near the shaft support portion 613. In this regard, in the laser scanning unit 6 according to the present embodiment, difference among optical performances of a plurality of light beams scanned by the rotary polygon mirror 620 is reduced.

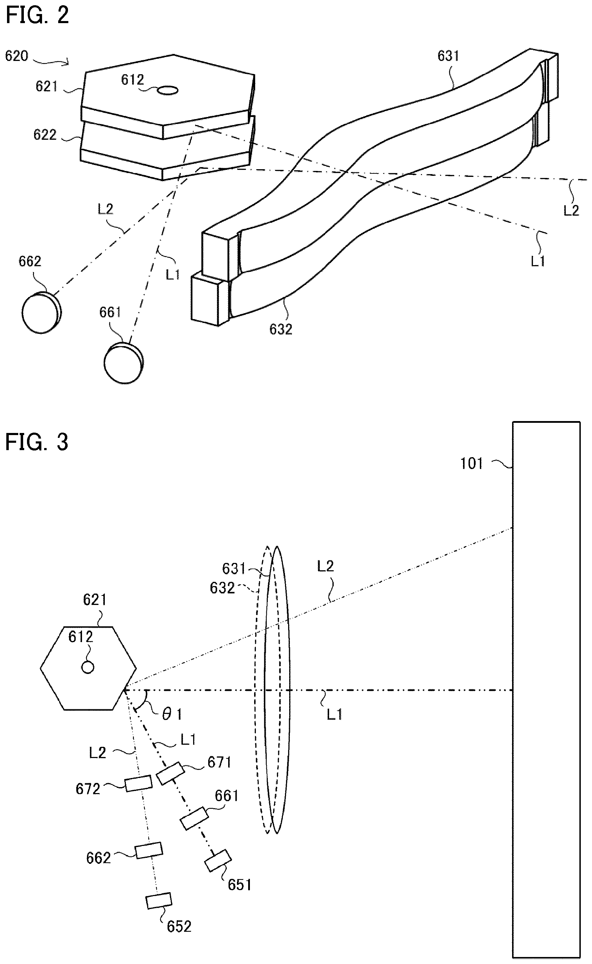

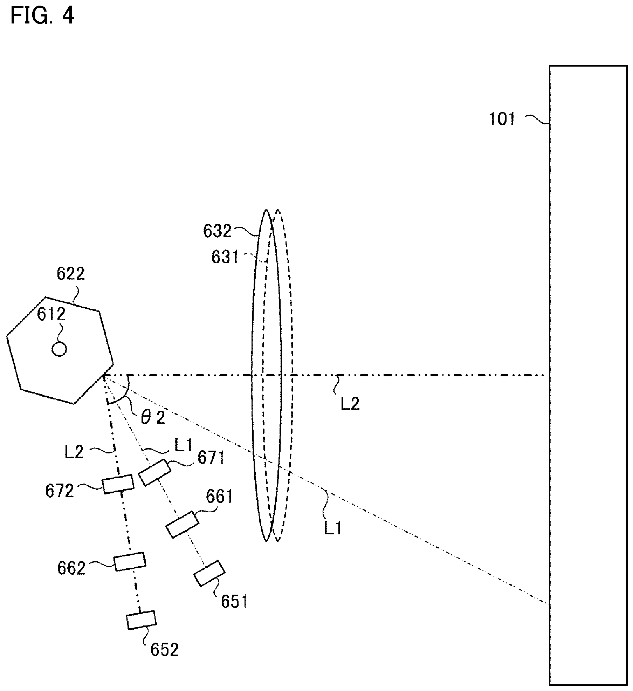

Hereinafter, the configuration of the laser scanning unit 6 will be described with reference to FIG. 2 to FIG. 4. Here, of the laser scanning unit 6, the configuration corresponding to the image forming units 1, 2 will be described, but the same applies to the configuration corresponding to the image forming units 3, 4. FIG. 3 is a plan view schematically showing an optical path of a light beam L1 for the image forming unit 1 scanned by the first rotary polygon mirror 621, and FIG. 4 is a plan view schematically showing an optical path of a light beam L1 for the image forming unit 2 scanned by the second rotary polygon mirror 622.

As shown in FIG. 2 to FIG. 4, the laser scanning unit 6 includes light sources 651, 652, collimator lenses 661, 662, and cylindrical lenses 671, 672, as the two systems of light application portions for causing the light beam L1 (an example of a first light beam and a specific light beam) and the light beam L2 (an example of a second light beam) to be incident on the first rotary polygon mirror 621 and the second rotary polygon mirror 622. In FIG. 2, the light sources 651, 652 and the cylindrical lenses 671, 672 are not shown. One or a plurality of reflection mirrors or the like may be provided between the light sources 651, 652, and the first rotary polygon mirror 621 and the rotary polygon mirror 622.

The laser scanning unit 2 also includes a light detection portion (not shown) which detects, at a predetermined position, a light beam scanned by the rotary polygon mirror 620. In the image forming apparatus 10, a timing of drawing an image by the laser scanning unit 6 is controlled in accordance with a timing of detection of the light beam by the light detection portion.

The light sources 651, 652 are semiconductor laser elements that emit the light beams L1, L2. The light sources 651, 652 may be a monolithic multi beam laser diode capable of emitting a plurality of light beams.

The collimator lenses 661, 662 convert the light beams L1, L2 emitted from the light sources 651, 652, into parallel light beams. The cylindrical lenses 671, 672 condense the light beams L1, L2 that have passed through the collimator lenses 661, 662, in line shapes on the first rotary polygon mirror 621 and the second rotary polygon mirror 622. That is, the light beam L2 is incident at a position nearer the shaft support portion 613 as compared to the light beam L1. Then, the light beam L1 scanned by the first rotary polygon mirror 621 enters the first scanning lens 631, and the light beam L2 scanned by the second rotary polygon mirror 622 enters the second scanning lens 632.

In the laser scanning unit 6, as shown in FIG. 3 and FIG. 4, the angles of the light beams L1, L2 incident on the rotary polygon mirror 620 are different from each other in a plan view, and their reflection positions on the rotary polygon mirror 620 are different from each other. Therefore, in the laser scanning unit 6, the scanning lenses 631, 632 are arranged with an offset provided so that one of them is away from the other one in the travelling direction of the light beams L1, L2 by a predetermined distance. Specifically, in the laser scanning unit 6, the scanning lens 631 is located more distant from the rotary polygon mirror 620 than the scanning lens 632.

In the laser scanning unit 6, as shown in FIG. 3, the angle between the light beam L1 incident on the first rotary polygon mirror 621 and the optical axis of the scanning lens 631 when the light beam L1 incident on the first rotary polygon mirror 621 passes through the optical axis of the scanning lens 631, is the incidence opening angle θ1. In addition, in the laser scanning unit 6, as shown in FIG. 4, the angle between the light beam L2 incident on the second rotary polygon mirror 622 and the optical axis of the scanning lens 632 when the light beam L2 incident on the second rotary polygon mirror 622 passes through the optical axis of the scanning lens 632, is the incidence opening angle θ2. Specifically, in the laser scanning unit 6, a relationship in which the incidence opening angle θ1 of the light beam L1 is smaller than that of the other light beam L2 (incidence opening angle θ1 < incidence opening angle θ2) is satisfied.

Here, in the laser scanning unit 6, the incidence opening angle θ1 between the light beam L1 incident on the first rotary polygon mirror 621 and the optical axis of the scanning lens 632 when the light beam L1 passes through the optical axis of the scanning lens 631, is equal to the reference angle θ0. Therefore, a difference between the reference angle θ0 and the incidence opening angle θ2 of the light beam L2 incident on the second rotary polygon mirror 622 which is near the shaft support portion 613 in the axial direction D1 is greater than a difference between the reference angle θ0 and the incidence opening angle θ1 of the light beam L1. It is noted that, if the incidence opening angle θ1 cannot be made equal to the reference angle θ0 due to the arrangement relationship of components in the laser scanning unit 6, it is only necessary that at least the incidence opening angle θ1 is closer to the reference angle θ0 than the incidence opening angle θ2. In a laser scanning unit in which three or more rotary polygon mirrors are supported by one rotary shaft, it is only necessary to satisfy such a relationship that the incidence opening angle of a light beam incident on the rotary polygon mirror that is most distant from a shaft support portion supporting one end of the rotary shaft is closest to the reference angle θ0.

In the laser scanning unit 6 configured as described above, difference between optical performances of the light beams L1, L2 scanned by the first rotary polygon mirror 621 and the second rotary polygon mirror 622 is reduced. Specifically, the optical performance of the light beam L1 scanned by the first rotary polygon mirror 621 is reduced because of great sway of the first rotary polygon mirror 621 during rotation, but is enhanced owing to small difference between the incidence opening angle θ1 and the reference angle θ0. On the other hand, the optical performance of the light beam L2 scanned by the second rotary polygon mirror 622 is reduced because of great difference between the incidence opening angle θ2 and the reference angle θ0, but is enhanced owing to small sway of the second rotary polygon mirror 622 during rotation. That is, in the laser scanning unit 6, neither the optical performance of the light beam L1 nor the optical performance of the light beam L2 is extremely reduced. Therefore, in the laser scanning unit 6, fθ lenses of the same standard can be used as the scanning lenses 631, 632.

In the laser scanning unit, as the incidence opening angle decreases, the movement amount of the incidence point of the light beam on the reflection surface during rotation of the rotary polygon mirror decreases and variation of the incidence position of the light beam on the scanning lens decreases, and therefore reduction in the optical performance of the light beam is suppressed. Further, in the laser scanning unit 6, a relationship of incidence opening angle θ1 < incidence opening angle θ2 is satisfied. Therefore, as compared to the case where a relationship of incidence opening angle θ1 ≥ incidence opening angle θ2 is satisfied, reduction in the optical performance of the light beam L1 due to sway of the first rotary polygon mirror 621 during rotation is suppressed. In another embodiment, in the laser scanning unit 6, it is conceivable that a relationship in which the incidence opening angle θ1 of the light beam L1 incident on the first rotary polygon mirror 621 is closest to the reference angle θ0 is satisfied and a relationship of incidence opening angle θ1 ≥ incidence opening angle θ2 is satisfied.

In particular, for example, in the case where the incidence angle θ1 cannot be made equal to the reference angle θ0 due to the arrangement relationship of components in the laser scanning unit 6, it is preferable that a relationship of difference between incidence angle θ1 and reference angle θ0 < difference between incidence angle θ2 and reference angle θ0 is satisfied and a relationship of incidence opening angle θ1 < incidence opening angle θ2 is satisfied. Further, in the case where the incidence angle θ1 cannot be made equal to the reference angle θ0, it is preferable that a relationship of incidence opening angle θ1 < reference angle θ0 < incidence opening angle θ2 is satisfied. In this case, reduction of optical performance in the laser scanning unit 6 is suppressed as compared to the case where, for example, a relationship of reference angle θ0 < incidence opening angle θ1 < incidence opening angle θ2 is satisfied or a relationship of incidence opening angle θ1 < incidence opening angle θ2 < reference angle θ0 is satisfied. In a laser scanning unit in which three or more rotary polygon mirrors are supported by one rotary shaft, it is only necessary to satisfy such a relationship that the incidence opening angle of the light beam incident on the rotary polygon mirror that is most distant from a shaft support portion supporting one end of the rotary shaft is smallest.

In the present embodiment, regarding the light beams L1, L2, a relationship in which the incidence opening angle θ1 of the light beam L1 incident on the first rotary polygon mirror 621 is closest to the reference angle θ0 is satisfied and a relationship of incidence opening angle θ1 < incidence opening angle θ2 is satisfied. In another example, which does not form part of the invention, in the laser scanning unit 6, it is conceivable that a relationship in which the incidence opening angle θ1 is closest to the reference angle θ0 is not satisfied and a relationship of difference between incidence opening angle θ1 and reference angle θ0 ≥ difference between incidence opening angle θ2 and reference angle θ0 is satisfied. Also in this case, in the laser scanning unit 6, it is conceivable that a relationship in which the incidence opening angle θ1 of the light beam L1 is smaller than that of the other light beam L2 (incidence opening angle θ1 < incidence opening angle θ2) is satisfied. Thus, reduction in the optical performance of the light beam L1 due to sway of the first rotary polygon mirror 621 during rotation is suppressed at least as compared to the case where a relationship of difference between incidence opening angle θ1 and reference angle θ0 ≥ difference between incidence opening angle θ2 and reference angle θ0 is satisfied and a relationship of incidence opening angle θ1 ≥ incidence opening angle θ2 is satisfied. Therefore, difference between the optical performances of the light beams L1, L2 scanned by the first rotary polygon mirror 621 and the second rotary polygon mirror 622 is reduced.

## Claims

1. A laser scanning unit (6) comprising:
a rotary polygon mirror (620) rotatable about a rotary shaft (612);
a shaft support portion (613) supporting only one end of the rotary shaft (612);
a plurality of light application portions (661, 662, 671, 672) configured to cause light beams to be incident at a plurality of incidence positions different in an axial direction parallel to the rotary shaft (612) on the rotary polygon mirror (620); and
a plurality of scanning lenses (631, 632) provided correspondingly for the plurality of light beams scanned by rotation of the rotary polygon mirror (620), the plurality of scanning lenses (631, 632) being configured to scan the respective light beams at an equal speed on scanning target surfaces (101) corresponding to the light beams, wherein
the plurality of scanning lenses (631, 632) are of a same standard,
the following relationship is satisfied: when, of the plurality of light beams, a specific light beam incident at the incidence position that is most distant from the shaft support portion (613) on the rotary polygon mirror (620) passes through an optical axis of the corresponding scanning lens, an incidence opening angle (θ1, θ2) between the specific light beam incident on the rotary polygon mirror and the optical axis of the scanning lens is closest to a reference angle defined in advance as a usage condition of the scanning lens,
the rotary polygon mirror (620) , the plurality of light application portions (661, 662, 671, 672), and the plurality of scanning lenses (631, 632) are disposed such that the scanning lens that, of the plurality of scanning lenses (631, 632), corresponds to the specific light beam, is located more distant from the rotary polygon mirror than other scanning lens(es), and
an optimum value of the incidence opening angle (θ1, θ2) that is set as a usage condition of the scanning lens, is defined in advance as the reference angle, **characterized in that**,
the standard of the scanning lenses (631, 632) prescribes a usage condition wherein the reference angle is such an angle that minimizes a field curvature on each scanning target surface caused by the light beam scanned by the corresponding scanning lens,
the plurality of light beams comprise a first light beam which is the specific light beam, and a second light beam incident at the incidence position nearer the shaft support portion (613) than the first light beam on the rotary polygon mirror (620),
the plurality of scanning lenses (631, 632) comprise a first scanning lens (631) corresponding to the first light beam, and a second scanning lens (632) corresponding to the second light beam, and
the rotary polygon mirror (620), the plurality of light application portions (661, 662, 671, 672), and the plurality of scanning lenses (631, 632) are disposed such that the following relationship is satisfied: an incidence opening angle (θ1) between the first light beam incident on the rotary polygon mirror (620) and the optical axis of the first scanning lens (631) when the first light beam passes through the optical axis of the first scanning lens (631) is closer to the reference angle than an incidence opening angle (θ2) between the second light beam incident on the rotary polygon mirror (620) and the optical axis of the second scanning lens (632) when the second light beam passes through the optical axis of the second scanning lens (632).

2. The laser scanning unit (6) according to claim 1, wherein the incidence opening angle (θ1) is equal to the reference angle.

3. The laser scanning unit (6) according to claim 1, wherein,
the rotary polygon mirror (620) includes a first rotary polygon mirror (621) and a second rotary polygon mirror (622) which is located nearer the shaft support portion (613) than the first rotary polygon mirror (621), and
the first light beam is incident on the first rotary polygon mirror (621) and the second light beam is incident on the second rotary polygon mirror (622).

4. The laser scanning unit (6) according to claim 1, wherein,
the rotary polygon mirror (620), the plurality of light application portions (661, 662, 671, 672), and the plurality of scanning lenses (631, 632) are disposed such that the following relationship is satisfied: the incidence opening angle (θ1) between the specific light beam incident on the rotary polygon mirror (620) and the optical axis of the scanning lens (631) when the specific light beam passes through the optical axis of the scanning lens (631) is smaller than that of the other light beam.

5. An image forming apparatus (10) comprising the laser scanning unit (6) according to claim 1, the image forming apparatus (10) being configured to develop an electrostatic latent image formed on the scanning target surface (101) by the laser scanning unit (6), and transfer the developed image onto a sheet.

## Patentansprüche

1. Laserscaneinheit (6), umfassend:
einen Dreh-Polygonspiegel (620), der um eine Drehwelle (612) drehbar ist;
einen Wellenstützabschnitt (613), der nur ein Ende der Drehwelle (612) stützt;
eine Vielzahl von Lichtanwendungsabschnitten (661, 662, 671, 672), die dazu konfiguriert sind, zu veranlassen, dass Lichtstrahlen auf eine Vielzahl von Einfallpositionen, die sich in einer axialen Richtung parallel zu der Drehwelle (612) an dem Dreh-Polygonspiegel (620) unterscheiden, einfallen; und
eine Vielzahl von Scanlinsen (631, 632), die entsprechend für die Vielzahl von Lichtstrahlen, die durch Drehung des Dreh-Polygonspiegels (620) gescannt werden, bereitgestellt sind, wobei die Vielzahl von Scanlinsen (631, 632) dazu konfiguriert ist, die entsprechenden Lichtstrahlen mit einer gleichen Geschwindigkeit auf Scanzieloberflächen (101) gemäß den Lichtstrahlen zu scannen, wobei
die Vielzahl von Scanlinsen (631, 632) den gleichen Standard aufweist,
die folgende Beziehung erfüllt ist: wenn aus der Vielzahl von Lichtstrahlen ein Lichtstrahl, der auf die Einfallsposition einfällt, die von dem Wellenstützabschnitt (613) an dem Dreh-Polygonspiegel (620) am weitesten entfernt ist, durch eine optische Achse der entsprechenden Scanlinse läuft, befindet sich ein Einfallsöffnungswinkel (θ1, θ2) zwischen dem spezifischen Lichtstrahl, der auf den Dreh-Polygonspiegel einfällt, und der optischen Achse der Scanlinse am nächsten zu einem Referenzwinkel, der im Voraus als eine Verwendungsbedingung der Scanlinse definiert wird,
der Dreh-Polygonspiegel (620), die Vielzahl von Lichtanwendungsabschnitten (661, 662, 671, 672) und die Vielzahl von Scanlinsen (631, 632) derart angeordnet sind, dass sich die Scanlinse, die aus der Vielzahl von Scanlinsen (631, 632) dem spezifischen Lichtstrahl entspricht, entfernter von dem Dreh-Polygonspiegel befindet als andere Scanlinsen, und
ein optimaler Wert des Einfallsöffnungswinkels (θ1, θ2), der als eine Verwendungsbedingung der Scanlinse eingestellt ist, im Voraus als der Referenzwinkel definiert wird, **dadurch gekennzeichnet, dass**
der Standard der Scanlinse (631, 632) eine Verwendungsbedingung vorschreibt, wobei der Referenzwinkel ein solcher Winkel ist, der eine Feldkrümmung an jeder Scanzieloberfläche, die durch den durch die entsprechende Scanlinse gescannten Lichtstrahl verursacht wird, minimiert,
die Vielzahl von Lichtstrahlen einen ersten Lichtstrahl, der der spezifische Lichtstrahl ist, und einen zweiten Lichtstrahl, der auf die Einfallsposition näher an dem Wellenstützabschnitt (613) als der erste Lichtstrahl auf dem Dreh-Polygonspiegel (620) einfällt, umfasst,
die Vielzahl von Scanlinsen (631, 632) eine erste Scanlinse (631) entsprechend dem ersten Lichtstrahl und eine zweite Scanlinse (632) entsprechend dem zweiten Lichtstrahl umfasst, und
der Dreh-Polygonspiegel (620), die Vielzahl von Lichtanwendungsabschnitten (661, 662, 671, 672) und die Vielzahl von Scanlinsen (631, 632) so angeordnet sind, dass die folgende Beziehung erfüllt ist: ein Einfallsöffnungswinkel (θ1) zwischen dem ersten Lichtstrahl, der auf den Dreh-Polygonspiegel (620) einfällt, und der optischen Achse der ersten Scanlinse (631), wenn der erste Lichtstrahl durch die optische Achse der ersten Scanlinse (631) läuft, liegt näher an dem Referenzwinkel als ein Einfallsöffnungswinkel (θ2) zwischen dem zweiten Lichtstrahl, der auf den Dreh-Polygonspiegel (620) einfällt, und der optischen Achse der zweiten Scanlinse (632), wenn der zweite Lichtstrahl durch die optische Achse der zweiten Scanlinse (632) läuft.

2. Laserscaneinheit (6) nach Anspruch 1, wobei der Einfallsöffnungswinkel (θ1) gleich dem Referenzwinkel ist.

3. Laserscaneinheit (6) nach Anspruch 1, wobei
der Dreh-Polygonspiegel (620) einen ersten Dreh-Polygonspiegel (621) und einen zweiten Dreh-Polygonspiegel (622), der sich näher an dem Wellenstützabschnitt (613) befindet als der erste Dreh-Polygonspiegel (621), beinhaltet, und
der erste Laserstrahl auf den ersten Dreh-Polygonspiegel (621) einfällt und der zweite Lichtstrahl auf den zweiten Dreh-Polygonspiegel (622) einfällt.

4. Laserscaneinheit (6) nach Anspruch 1, wobei
der Dreh-Polygonspiegel (620), die Vielzahl von Lichtanwendungsabschnitten (661, 662, 671, 672) und die Vielzahl von Scanlinsen (631, 632) so angeordnet sind, dass die folgende Beziehung erfüllt ist: der Einfallsöffnungswinkel (θ1) zwischen dem spezifischen Lichtstrahl, der auf den Dreh-Polygonspiegel (620) einfällt, und der optischen Achse der Scanlinse (631), wenn der spezifische Lichtstrahl durch die optische Achse der Scanlinse (631) läuft, ist kleiner als der des anderen Lichtstrahls.

5. Bilderzeugungsvorrichtung (10), umfassend die Laserscaneinheit (6) nach Anspruch 1, wobei die Bilderzeugungsvorrichtung (10) dazu konfiguriert ist, ein elektrostatisches latentes Bild zu entwickeln, das auf der Scanzieloberfläche (101) durch die Laserscaneinheit (6) gebildet wird, und das entwickelte Bild auf ein Blatt zu übertragen.

## Revendications

1. Unité de balayage laser (6) comprenant :
un miroir polygonal rotatif (620) pouvant tourner autour d'un arbre rotatif (612) ;
une partie de support (613) d'arbre supportant uniquement une extrémité de l'arbre rotatif (612) ;
une pluralité de parties d'application de lumière (661, 662, 671, 672) conçues pour amener des faisceaux lumineux à être incidents à une pluralité de positions d'incidence différentes dans une direction axiale parallèle à l'arbre rotatif (612) sur le miroir polygonal rotatif (620) ; et
une pluralité de lentilles de balayage (631, 632) disposées de manière correspondante pour la pluralité de faisceaux lumineux balayés par rotation du miroir polygonal rotatif (620), la pluralité de lentilles de balayage (631, 632) étant conçues pour balayer les faisceaux lumineux respectifs à un vitesse égale sur les surfaces cibles (101) de balayage correspondant aux faisceaux lumineux,
ladite pluralité de lentilles de balayage (631, 632) étant d'une même norme,
ladite relation suivante étant satisfaite : lorsque, parmi la pluralité de faisceaux lumineux, un faisceau lumineux spécifique incident à la position d'incidence la plus éloignée de la partie de support (613) d'arbre sur le miroir polygonal rotatif (620) passe à travers un axe optique de la lentille de balayage correspondante, un angle d'ouverture d'incidence (θ1, θ2) entre le faisceau lumineux spécifique incident sur le miroir polygonal rotatif et l'axe optique de la lentille de balayage est le plus proche d'un angle de référence défini à l'avance en tant que condition d'utilisation de la lentille de balayage,
ledit miroir polygonal rotatif (620), ladite pluralité de parties d'application de lumière (661, 662, 671, 672) et ladite pluralité de lentilles de balayage (631, 632) étant disposés de sorte que la lentille de balayage, de la pluralité de lentilles de balayage (631, 632), qui correspond au faisceau lumineux spécifique, soit plus éloigné du miroir polygonal rotatif que les autres lentilles de balayage, et
une valeur optimale de l'angle d'ouverture d'incidence (θ1, θ2) qui est définie en tant que condition d'utilisation de la lentille de balayage, étant définie à l'avance en tant qu'angle de référence, **caractérisée en ce que,**
la norme des lentilles de balayage (631, 632) prescrit une condition d'utilisation dans laquelle l'angle de référence est un angle tel qu'il minimise une courbure de champ sur chaque surface cible de balayage amenée par le faisceau lumineux balayée par la lentille de balayage correspondante,
la pluralité de faisceaux lumineux comprend un premier faisceau lumineux qui est le faisceau lumineux spécifique, et un second faisceau lumineux incident à la position d'incidence plus près de la partie de support (613) d'arbre que le premier faisceau lumineux sur le miroir polygonal rotatif (620),
la pluralité de lentilles de balayage (631, 632) comprennent une première lentille de balayage (631) correspondant au premier faisceau lumineux, et une seconde lentille de balayage (632) correspondant au second faisceau lumineux, et
le miroir polygonal rotatif (620), la pluralité de parties d'application de lumière (661, 662, 671, 672) et la pluralité de lentilles de balayage (631, 632) sont disposées de sorte que la relation suivante soit satisfaite : un angle d'ouverture d'incidence (θ1) entre le premier faisceau lumineux incident sur le miroir polygonal rotatif (620) et l'axe optique de la première lentille de balayage (631) lorsque le premier faisceau lumineux passe à travers l'axe optique de la première lentille de balayage (631) est plus proche de l'angle de référence qu'un angle d'ouverture d'incidence (θ2) entre le second faisceau lumineux incident sur le miroir polygonal rotatif (620) et l'axe optique de la seconde lentille de balayage (632) lorsque le second faisceau lumineux passe à travers l'axe optique de la seconde lentille de balayage (632).

2. Unité de balayage laser (6) selon la revendication 1, ledit angle d'ouverture d'incidence (θ1) étant égal à l'angle de référence.

3. Unité de balayage laser (6) selon la revendication 1,
ledit miroir polygonal rotatif (620) comprenant un premier miroir polygonal rotatif (621) et un second miroir polygonal rotatif (622) qui est situé plus près de la partie de support (613) d'arbre que le premier miroir polygonal rotatif (621), et
ledit premier faisceau lumineux étant incident sur le premier miroir polygonal rotatif (621) et ledit second faisceau lumineux étant incident sur le second miroir polygonal rotatif (622).

4. Unité de balayage laser (6) selon la revendication 1,
ledit miroir polygonal rotatif (620), ladite pluralité de parties d'application de lumière (661, 662, 671, 672) et ladite pluralité de lentilles de balayage (631, 632) étant disposées de sorte que la relation suivante soit satisfaite : l'angle d'ouverture d'incidence (θ1) entre le faisceau lumineux spécifique incident sur le miroir polygonal rotatif (620) et l'axe optique de la lentille de balayage (631) lorsque le faisceau lumineux spécifique passe à travers l'axe optique de la lentille de balayage (631) est plus petit que celui de l'autre faisceau lumineux.

5. Appareil de formation d'images (10) comprenant l'unité de balayage laser (6) selon la revendication 1, l'appareil de formation d'images (10) étant conçu pour développer une image latente électrostatique formée sur la surface cible (101) de balayage par l'unité de balayage laser (6), et transférer l'image développée sur une feuille.
